# EUROPÄISCHE PATENTSCHRIFT

(11) **EP 3 430 371 B1**
(45) Veröffentlichungstag und Bekanntmachung des Hinweises auf die Patenterteilung: **06.05.2020**
(21) Anmeldenummer: 17709651.8
(22) Anmeldetag: 08.03.2017
(51) Int. Cl.: G01M 17/10, B61F 9/00

(54) **VERFAHREN ZUM ERZEUGEN VON DATEN FÜR DIE VALIDIERUNG VON ENTGLEISUNGSDETEKTIONSSYSTEMEN**
METHOD FOR GENERATING DATA FOR THE VALIDATION OF SYSTEMS FOR THE DETECTION OF DERAILING
PROCÉDÉ POUR LA GÉNÉRATION DE DONNÉES POUR LA VALIDATION DE SYSTÈMES DE DÉTECTION DU DÉRAILLEMENT

(30) Priorität: 15.03.2016 DE 102016104722
(43) Veröffentlichungstag der Anmeldung: 23.01.2019
(73) Patentinhaber: KNORR-BREMSE Systeme für Schienenfahrzeuge GmbH, 80809 München (DE)
(72) Erfinder: GÜNTHER, Frank, 80993 München (DE); SCHNEIDER, Stefan, 80995 München (DE); ETZBACH, Andrea, 80807 München (DE); FRIESEN, Ulf, 85579 Neubiberg (DE); HERDEN, Marc-Oliver, 81377 München (DE); KREISEL, Norman, 01728 Bannewitz (DE); WACH, Jörg-Johannes, 81247 München (DE)
(86) Internationale Anmeldenummer: PCT/EP2017/055398
(87) Internationale Veröffentlichungsnummer: WO 2017/157734

(56) Entgegenhaltungen:
- WO-A1-2014/192897
- CN-U- 204 439 372
- DE-C1- 19 953 677
- O. POLACH ET AL: "Simulations of Running Dynamics for Vehicle Acceptance: Application and Validation", INTERNATIONAL JOURNAL OF RAILWAY TECHNOLOGY, [Online] Bd. 2, Nr. 4, 8. April 2014 (2014-04-08), - 11. April 2014 (2014-04-11), Seiten 59-84, XP055370800, ISSN: 2049-5358, DOI: 10.4203/ijrt.2.4.4 [gefunden am 2017-05-09]
- LING LIANG ET AL: "Development of a simulation model for dynamic derailment analysis of high-speed trains", ACTA MECHANICA SINICA, SPRINGER BERLIN HEIDELBERG, BERLIN/HEIDELBERG, Bd. 30, Nr. 6, 1. Februar 2015 (2015-02-01), Seiten 860-875, XP035439548, ISSN: 0567-7718, DOI: 10.1007/S10409-014-0111-0 [gefunden am 2015-02-01]

## Beschreibung

Die Erfindung betrifft ein Verfahren zum Erzeugen von Daten für die Validierung von Entgleisungsdetektionssystemen von Schienenfahrzeugen, bei dem ein Simulationsmodell anhand von Messdaten, die bei Versuchen mit einem Versuchsträger erzeugt werden, adaptiert wird, und anschließend die Daten für die Validierung der Entgleisungsdetektionssysteme durch das Durchführen von Simulationen mit dem Simulationsmodell erzeugt werden.

In Schienenfahrzeugen werden Vorrichtungen und Verfahren eingesetzt, um eine Entgleisung des Schienenfahrzeugs zu erkennen.

Ein solches Verfahren offenbart die WO 2014/192897. Dabei werden während der Fahrt gewonnene Messdaten mit Grenzwerten verglichen, die aus einem Experiment oder einer Simulation gewonnen werden können. Der Artikel "Simulations of Running Dynamics for Vehicle Acceptance: Application and Validation", der 2013 im "International Journal of Railway Technology" erschienen ist gibt einen Überblick über die Bedeutung der Validierung anhand von Messungen bei unterschiedlichen Konfigurationen und auf unterschiedlichen Gleisabschnitten von simulierten Daten insbesondere für die Fahrzeugzulassung. Ferner beschäftigt sich der im Februar 2015 erschienene Artikel "Development of a simulation model for dynamic derailment analysis of high-speed trains" mit der numerischen Simulation von Entgleiseverhalten bei Hochgeschwindigkeitszügen und beschreibt dafür ein Simulationsmodell für die Analyse des Entgleisungsvorgangs, wobei der Fahrweg als ein Teil des Simulationsmodells ebenfalls simuliert wird. Darüber hinaus ist in der CN 204 439 372 U ein Versuchsträger beschrieben, der ein vereinfachtes Modell eines Schienenfahrzeugs darstellt und für die Validierung von Simulationen eingesetzt werden kann.

Aus der DE 199 53 677 C1 sind weiterhin ein Verfahren und eine Vorrichtung zur Erkennung einer Entgleisung eines spurgebundenen Fahrzeugs bekannt. Eine Beschleunigung eines mit der Fahrspur direkt oder indirekt in Kontakt stehenden Bauelementes des spurgebundenen Fahrzeugs vertikal und/oder quer zu einer Fahrtrichtung wird durch einen Beschleunigungssensor ermittelt, und das Signal des Beschleunigungssensors wird zweifach über die Zeit integriert. Überschreitet diese zweifach integrierte Beschleunigung einen Grenzwert, wird bei Überschreiten des Grenzwertes auf eine Entgleisung erkannt.

Insbesondere schnelle Züge und Strecken mit sogenannter "Fester Fahrbahn", d.h. einer Fahrbahn, bei der die Schwellen nicht wie bei herkömmlichem Schotteroberbau in Schotter gelagert sind, sondern die Schienen direkt auf einer Betonfahrbahn befestigt sind oder die Schwellen, auf denen die Schienen befestigt sind, in Beton eingegossen sind, stellen hohe Anforderungen an Systeme zur Entgleisungsdetektion. Es werden daher verbesserte Erkennungsmechanismen entwickelt, um eine Entgleisung in allen Geschwindigkeitsbereichen sowie auch auf fester Fahrbahn sicher erkennen zu können.

Die entwickelten Algorithmen der Entgleisungsdetektionssysteme müssen validiert werden, um sicherstellen zu können, dass mit den Algorithmen auch eine sichere Entgleisungsdetektion möglich ist. Bei einem Entgleisungsdetektionsverfahren auf Basis von Beschleunigungen kann die Validierung beispielsweise einerseits anhand von Daten aus realen Entgleisungsversuchen mit Fahrzeugen erfolgen, bei welchen der Entgleisungsdetektor direkt an das Versuchsfahrzeug eingebaut ist und nach einer initiierten Entgleisung entsprechend auslöst.

Derartige reale Entgleisungsversuche sind jedoch sehr aufwendig und verursachen hohe Kosten. Die Versuche können nur begrenzt wiederholt werden und stellen damit nur Validierungsdaten für einige wenige Szenarien, d.h. nur für bestimmte Fahrzeugtypen, Beladungen, Geschwindigkeiten, Streckenaufbauten und Streckenzustände dar. Eine breite Versuchsreihe mit realen Entgleisungen, bei der die Randbedingungen variiert werden, ist wirtschaftlich nicht möglich.

Eine Validierung von Entgleisungsdetektionsalgorithmen kann jedoch neben oder in Ergänzung zu Messdaten auch anhand von aus Simulationen erhaltenen Daten erfolgen. Dabei können Fahrten auf dem Gleis sowie entgleiste Fahrten simuliert werden, und der Erkennungsalgorithmus der Entgleisungsdetektion kann daraufhin überprüft werden, ob er erkennt, wenn eine Fahrt nicht auf dem Gleis erfolgt, sondern eine entgleiste Fahrt simuliert wird. Dabei ist der Erkennungsalgorithmus insbesondere daraufhin zu prüfen, ob er auch bei ungünstigen Verläufen einer Entgleisung eine sichere Erkennung der Entgleisung ermöglicht, und eine Entgleisung von einer Fahrt auf einem realen schlechten Gleis sicher unterschieden werden kann. Durch Verwendung von Simulationsdaten parallel oder anstelle von Messdaten aus realen Entgleisungsversuchen können somit Daten bereitgestellt werden, anhand welcher die Auslöseschwelle zur Detektion einer Entgleisung unter bestimmten definierten Randbedingungen, beispielsweise Fahrzeugtyp, Beladung, Geschwindigkeit, Streckenaufbau und Streckenzustand, etc. überprüft werden kann.

Dafür müssen jedoch Simulationsmodelle bereitgestellt werden, durch die mit ausreichender Güte eine Simulation von Fahrten unter verschiedenen Randbedingungen, und insbesondere auf verschiedenen Untergründen, wie beim Rollen des Rades auf einer Betonfahrbahn nach einer Entgleisung auf einer festen Fahrbahn, durchgeführt werden kann.

Der Erfindung liegt somit die Aufgabe zugrunde, ein Verfahren bereitzustellen, mit dem die Simulationsgüte von Simulationsmodellen für die Fahrt eines Schienenfahrzeuges auf einem Fahrweg insbesondere bei einer Entgleisung so verbessert werden kann, dass die erzeugten Simulationsdaten für die Validierung von Entgleisungsdetektionssystemen von Schienenfahrzeugen genutzt werden können. Diese Aufgabe wird durch ein Verfahren mit den Verfahrensschritten des Anspruchs 1 sowie eine Vorrichtung nach Anspruch 13 gelöst. Weitere Merkmale der Erfindung ergeben sich aus den Unteransprüchen.

In einem erfindungsgemäßen Verfahren zum Erzeugen von Daten für die Validierung von Entgleisungsdetektionssystemen von Schienenfahrzeugen wird zunächst ein Simulationsmodell, mit dem eine Simulation einer Fahrt eines Schienenfahrzeuges auf einem bestimmten Fahrweg durchgeführt werden kann, ausgewählt. Das Simulationsmodell enthält ein Teilmodell für den Kontakt zwischen Rad des Schienenfahrzeugs und dem bestimmten Fahrweg. In dem Simulationsmodell wird das Teilmodell, das den Kontakt zwischen dem Rad und dem Fahrweg modelliert, durch ein Rad-Oberflächen-Kontaktmodell für einen anderen Fahrweg ersetzt. Es wird ein Versuchsträger hergestellt, der ein vereinfachtes Modell des Schienenfahrzeuges bildet. Mit dem Versuchsträger werden Versuche durchgeführt, bei denen Fahrten auf dem anderen Fahrweg durchgeführt werden. Bei den Versuchen werden Messungen durchgeführt, und die Parameter des Rad-Oberflächen-Kontaktmodells werden anhand der bei den Versuchen aufgenommenen Messdaten ermittelt bzw. angepasst. Mit dem Simulationsmodell, das das für die Fahrt auf dem anderen Fahrweg angepasste Teilmodell des Rad-Oberflächen-Kontakts enthält, werden Simulationen durchgeführt, mit denen Daten für die Validierung von Entgleisungsdetektionssystemen erzeugt werden.

Grundgedanke der Erfindung ist es, die für eine Validierung benötigten Datensätze einer entgleisten Fahrt auf verschiedenen Untergründen mittels Simulation zu generieren. Dabei wird von einem bekannten Fahrzeugmodell inklusive Fahrt auf einem Gleismodell mit entsprechenden Gleislagefehlern ausgegangen. Dieses Modell ist bekannt und validiert. Die Validierung des bekannten Fahrzeugmodells einschließlich des Kontaktmodells für die Fahrt auf dem Gleismodell, insbesondere die Fahrt auf einer Schiene, kann insbesondere anhand von Messungen durchgeführt werden, da Messungen für eine normale Fahrt auf der Schiene einfach durchgeführt werden können.

In diesem Simulationsmodell wird das Teilmodell, das den Kontakt zwischen Rad und Fahrweg, und hier insbesondere zwischen Rad und Schiene modelliert, durch ein Rad-Oberflächen-Kontaktmodell für einen anderen Fahrweg, insbesondere für das Rollen eines Rades auf dem Schienenzwischenraum nach einer Entgleisung, beispielsweise auf dem Beton einer festen Fahrbahn, ersetzt. Die weiteren Teilmodelle, beispielsweise das Teilmodell des Fahrzeugaufbaus, bleibt jedoch unverändert, da sich bei einer Fahrt auf einem anderen Fahrweg nur der Kontakt zwischen Rad und Fahrweg ändert, nicht jedoch der Aufbau des Fahrzeuges. Das Teilmodell für das Fahrzeug ist, wie vorstehend erläutert, bereits sehr gut validiert.

Typischerweise erfolgt die Entgleisungsdetektion aufgrund von Beschleunigungsverläufen, die an einer repräsentativen Stelle des Fahrzeugs gemessen werden, zum Beispiel am Achslager. Diese Beschleunigungen hängen nicht nur von der Beschaffenheit des Kontaktbereichs Rad-Oberfläche ab, sondern von der weiteren Umgebung im Fahrzeug. Diese Abhängigkeit von der weiteren Umgebung im Fahrzeug wird dadurch berücksichtigt, dass im validierten Simulationsmodell das Teilmodell des Fahrzeuges gleich bleibt und nur das Teilmodell für den Kontakt zwischen Rad und Oberfläche ausgetauscht wird. Die Parameter des Teilmodells für das Fahrzeug sind somit bekannt und bereits gut validiert, so dass nur die Parameter für das ausgetauschte Teilmodell des Rad-Oberflächen-Kontaktmodells ermittelt werden müssen.

Die Ermittlung der Parameter für das ausgetauschte Teilmodell des Rad-Oberflächen-Kontaktmodells erfolgt dadurch, dass ein Versuchsträger hergestellt wird, der das Fahrzeug vereinfacht abbildet. Der Versuchsträger wird dabei so gestaltet, dass er für den konkreten Einsatzfall bei den Versuchen, d.h. insbesondere für die Fahrt auf dem anderen Fahrweg und hier insbesondere einer entgleisten Fahrt in den Schienenzwischenräumen, ein weitgehend gleiches Verhalten zeigt wie das reale Fahrzeug, d.h. der Versuchsträger weist insbesondere weitgehend gleiche Massen, gleiche Steifigkeiten und gleiche Kontaktkräfte auf wie das reale Fahrzeug.

Mit dem Versuchsträger werden Fahrten auf dem anderen Fahrweg durchgeführt. Dabei werden insbesondere Versuche durchgeführt, bei denen der Versuchsträger nicht auf der Schiene fährt, sondern auf dem Fahrweg selber, insbesondere im Schienenzwischenraum, beispielsweise auf dem Beton einer festen Fahrbahn. Bei den Versuchen werden Messungen beispielsweise der Beschleunigungsverläufe durchgeführt.

Anhand der Messungen werden nun die Parameter des Rad-Oberflächen-Kontaktmodells angepasst. Die Parameteranpassung erfolgt so, dass das Modell sich für die gemessenen Fahrprofile weitgehend so verhält wie der Versuchsträger. Dadurch wird das Teilmodell für den Rad-Oberflächen-Kontakt parametriert. Eine Parametrierung des Fahrzeug-Teilmodells ist, wie vorstehend ausgeführt, hingegen nicht erforderlich, da dieses bereits entsprechend validiert ist.

Nachdem das Rad-Oberflächen-Kontaktmodell parametriert wurde, liegt ein Simulationsmodell vor, mit dem mit hinreichender Güte Simulationen für Fahrten auf dem anderen Fahrweg, insbesondere im entgleisten Zustand, auch für Randbedingungen, beispielsweise Fahrzeuglasten und Geschwindigkeiten, durchgeführt werden können, die über die Randbedingungen der Versuche mit dem vereinfachten Versuchsträger hinausgehen.

Dadurch können zusätzlich zu Daten aus realen Versuchen Daten generiert werden, mit denen ein Entgleisungsdetektionssystem validiert werden kann. Bei der Validierung wird beispielsweise überprüft, ob das Entgleisungsdetektionssystem eine normale Fahrt auf der Schiene, insbesondere bei schlechten Gleiszuständen, von einer Fahrt des Rades auf dem Fahrweg, beispielsweise auf dem Beton einer festen Fahrbahn, sicher unterscheiden kann.

Ein im Sinne der Erfindung ausgebildetes Verfahren zeichnet sich vor allem dadurch aus, dass auf aufwendige Messungen zur Validierung des Entgleisungsdetektionssystems verzichtet werden kann, und die Daten für die Validierung weitgehend durch Simulationsmodelle erzeugt werden können.

In einer vorteilhaften Ausgestaltung wird das Teilmodell für den Kontakt zwischen Rad und Fahrweg des ausgewählten validierten Simulationsmodells durch ein Rad-Oberflächen-Kontaktmodell ersetzt, welches verschiedenartige Materialien und Oberflächenstrukturen beschreibt. Dabei kann das ersetzende Rad-Oberflächen-Kontaktmodell den Rad-Oberflächen-Kontakt für eine vom modellierten Fahrweg im bisherigen Teilmodell für den Kontakt zwischen Rad und Fahrweg des ausgewählten validierten Simulationsmodells abweichende Oberfläche, oder auch für mehrere Oberflächen abbilden. Es können verschiedenartige Materialien der Oberfläche berücksichtigt werden, und insbesondere auch verschiedene Oberflächenstrukturen, beispielsweise eine weitgehend glatte Asphalt- oder Betonfläche zwischen oder neben den Schienen, auf denen ein entgleistes Rad rollt, oder unterschiedliche Gestaltungen der Fläche zwischen oder neben den Schienen, indem beispielsweise Schwellen, Schwellenstümpfe oder Rillen vorhanden sind.

In einer weiteren vorteilhaften Ausgestaltung modelliert das Teilmodell für den Kontakt zwischen Rad und Fahrweg des ausgewählten validierten Simulationsmodells einen Rad-Schiene-Kontakt für einen Schotteroberbau oder einen Rad-Schiene-Kontakt für eine feste Fahrbahn. D.h. es wird zunächst ein Simulationsmodell aufgewählt, in dem das Teilmodell für den Kontakt zwischen Rad und Fahrweg des ausgewählten validierten Simulationsmodells einen Rad-Schiene-Kontakt für einen Schotteroberbau oder einen Rad-Schiene-Kontakt für eine feste Fahrbahn abbildet. Für Fahrten mit Rad-Schiene-Kontakt für einen Schotteroberbau oder Rad-Schiene-Kontakt für eine feste Fahrbahn können einfach Messdaten aufgenommen werden, so dass das Simulationsmodell anhand dieser Daten einfach validiert werden kann, bevor das Teilmodell für den Kontakt zwischen Rad und Fahrweg gemäß dem erfindungsgemäßen Verfahren durch ein Rad-Oberflächen-Modell für einen anderen Fahrweg ersetzt wird.

In einer weiteren vorteilhaften Ausgestaltung des Verfahrens wird im Simulationsmodell ein Teilmodell für den Rad-Schiene-Kontakt für einen Schotteroberbau durch ein Rad-Beton-Kontaktmodell oder durch ein Rad-Asphalt-Kontaktmodell ersetzt.

Es wird somit von einem bestehenden und validierten Simulationsmodell ausgegangen, das eine Fahrt auf einer Schiene simuliert. Das Simulationsmodell weist damit zumindest ein Teilmodell für das Fahrzeug und ein Teilmodell für den Rad-Schiene-Kontakt auf, wobei die Parameter des Simulationsmodells, und insbesondere des Teilmodells des Rad-Schiene-Kontakts so angepasst sind, dass insbesondere eine Fahrt eines Schienenfahrzeuges auf einem Fahrweg mit einem herkömmlichen Schotteroberbau simuliert werden kann.

Das Teilmodell, das den Rad-Schiene-Kontakt für einen Schotteroberbau simuliert, wird durch ein Teilmodell ersetzt, das eine Fahrt eines Rades auf Beton oder auf Asphalt simuliert. Dabei handelt es sich insbesondere um das Rollen eines Rades zwischen den Schienen auf dem Beton oder dem Asphalt einer festen Fahrbahn im Anschluss an eine Entgleisung.

Durch die Verwendung eines Rad-Beton-Kontaktmodells oder eines Rad-Asphalt-Kontaktmodells können damit Simulationsdaten bereitgestellt werden, mit denen ein Verhalten nach einer Entgleisung auf einer festen Fahrbahn simuliert werden kann. Im Gegensatz zum Rad-Schiene-Kontaktmodell, das beispielsweise durch Messungen bei normalen Fahrten auf einer Schiene, die dementsprechend einfach durchgeführt werden können, parametriert wird, ist das Rad-Beton-Kontaktmodell oder das Rad-Asphalt-Kontaktmodell jedoch noch zu parametrieren, so dass ein Rollen eines Rades auf Beton oder Asphalt mit ausreichender Modellgüte wiedergegeben wird. Hierzu wird gemäß dem erfindungsgemäßen Verfahren ein Versuchsträger hergestellt, der ein vereinfachtes Modell des Fahrzeugs bildet. Es werden Versuche mit dem Versuchsträger durchgeführt, bei denen das Rad des Versuchsträgers über Beton oder Asphalt rollt. Insbesondere die Beschleunigungen, die durch das Rollen auf dem Beton oder Asphalt auftreten, werden gemessen. Anhand der gemessenen Daten werden die Parameter des Rad-Beton-Kontaktmodells so angepasst, dass das Simulationsmodell eine Fahrt auf Beton oder Asphalt mit hinreichender Modellgüte abbilden kann.

In einer besonders vorteilhaften Ausgestaltung des Verfahrens erfolgt die Anpassung der Parameter des Rad-Oberflächen-Kontaktmodells anhand der bei den Versuchen aufgenommenen Messungen mit der Hilfe eines weiteren Simulationsmodells, das aus einem Mehrkörpersystem-Modell des Versuchsträgers selbst sowie dem Rad-Oberflächen-Kontaktmodell für den anderen Fahrweg besteht.

Die Anpassung der Parameter des Rad-Oberflächen-Kontaktmodells erfolgt damit nicht im Simulationsmodell, mit dem die Simulationen für das Erzeugen von Daten für die Validierung von Entgleisungsdetektionssystemen durchgeführt werden, sondern in einem separaten Simulationsmodell, das neben dem Rad-Oberflächen-Kontaktmodell lediglich ein Mehrkörpersystem-Modell des Versuchsträgers aufweist.

Dadurch, dass der Versuchsträger einfach aufgebaut ist, kann das Mehrkörpersystem-Modell des Versuchsträgers einfach parametriert werden. Das Verhalten des Mehrkörpersystem-Modells des Versuchsträgers entspricht damit weitgehend dem realen Versuchsträger.

Durch Abgleich zwischen dem weiteren, aus einem Mehrkörpersystem-Modell des Versuchsträger sowie dem Rad-Oberflächen-Kontaktmodell für den anderen Fahrweg bestehenden Simulationsmodell mit den Messungen, die mit dem Versuchsträger durchgeführt werden, können damit, da die Parameter des Mehrkörpersystem-Modells des Versuchsträgers bereits bekannt sind, die Parameter des Rad-Oberflächen-Kontaktmodells anhand der Messdaten sehr genau bestimmt werden. Die Einflüsse von Parameter-Unsicherheiten weiterer Teilmodelle eines Simulationsmodells auf die Bestimmung der Parameter des Rad-Oberflächen-Kontaktmodells (die beispielsweise vorliegen würden, wenn die Parameteranpassung unter Verwendung des weit komplexeren Simulationsmodell erfolgen würde, mit dem die Simulationen für das Erzeugen von Daten für die Validierung von Entgleisungsdetektionssystemen durchgeführt werden) können damit weitgehend reduziert werden, da das weitere Simulationsmodell neben dem Kontaktmodell nur das einfach zu parametrierende Mehrkörpersystem-Modells des Versuchsträgers enthält. Dadurch können die Parameter des Rad-Oberflächen-Kontaktmodells anhand der mit dem Versuchsträger durchgeführten Messungen genauer bestimmt werden, als wenn die Bestimmung der Parameter mit dem komplexeren Simulationsmodell, das später zum Erzeugen der Daten für die Validierung von Entgleisungsdetektionssystemen verwendet wird, erfolgen würde.

In einer weiteren vorteilhaften Ausgestaltung des Verfahrens wird das Mehrkörpersystem-Modell des Versuchsträgers, das im weiteren Simulationsmodell zur Anpassung der Parameter des Rad-Oberflächen-Kontaktmodells verwendet wird, aus einer Masse, der Masse eines Einzelrades sowie einer Feder und einem Dämpfer, die zwischen der Masse und der Masse des Einzelrades angeordnet sind, gebildet. Das Mehrkörpersystem-Modell des Versuchsträgers ist somit ein einfaches Zweimassenmodell, bei dem die eine Masse, die insbesondere die Wagenmasse repräsentiert, mit der zweiten Masse, die die Masse eines Einzelrades ist, mit einer Feder und einem Dämpfer verbunden wird.

In einer weiteren vorteilhaften Ausgestaltung des Verfahrens wird die Masse des Mehrkörpersystem-Modells des Versuchsträgers, das im weiteren Simulationsmodell zur Anpassung der Parameter des Rad-Oberflächen-Kontaktmodells verwendet wird, anhand der Masse des Wagenkastens und des Drehgestells des Schienenfahrzeugs, die Federkonstante der Feder zwischen der Masse und der Masse des Einzelrades anhand der Federkonstanten zwischen Wagenkasten und Drehgestell sowie der Federkonstanten zwischen Drehgestell und Rad, und die Dämpferkonstante des zwischen Masse und Masse des Einzelrades angeordneten Dämpfers anhand der Dämpferkonstanten zwischen Wagenkasten und Drehgestell sowie Drehgestell und Rad bestimmt. Diese Parameter können entweder messtechnisch bestimmt werden, oder sie können anhand des konstruktiven Aufbaus der einzelnen Komponenten ermittelt werden. Damit kann das Mehrkörpersystem-Modell des Versuchsträgers, das im weiteren Simulationsmodell verwendet wird, mit dem die Parameter des Rad-Oberflächen-Kontaktmodells anhand der Messungen bestimmt werden, einfach ermittelt werden. Dadurch werden Ungenauigkeiten bei der Ermittlung der Parameter des Rad-Oberflächen-Kontaktmodells, die durch Ungenauigkeiten der Parameter des Mehrkörpersystem-Modells des Versuchsträgers hervorgerufen würden, soweit wie möglich vermieden.

In einer weiteren vorteilhaften Ausgestaltung des Verfahrens wird das Rad-Oberflächen-Kontaktmodell nach der Anpassung seiner Parameter, die mit Hilfe des weiteren Simulationsmodells erfolgt ist, anschließend in das Simulationsmodell, das zur Simulation der Fahrt des Schienenfahrzeugs auf dem Fahrweg verwendet wird, integriert, um mit diesem Simulationsmodell die Simulationen durchzuführen, mit denen die Daten für die Validierung von Entgleisungsdetektionssystemen erzeugt werden.

Die Anpassung der Parameter des Rad-Oberflächen-Kontaktmodells anhand der Messungen erfolgt damit zunächst mittels des weiteren Simulationsmodells, das wie vorstehend beschrieben lediglich aus einem Mehrkörpersystem-Modell des Versuchsträgers, das einfach parametrierbar ist, sowie dem Rad-Oberflächen-Kontaktmodell für den anderen Fahrweg besteht.

Erst nach der Parametrierung mittels dieses weiteren Simulationsmodells wird das Rad-Oberflächen-Kontaktmodell entnommen und in das komplexere Simulationsmodell integriert, mit dem durch die Simulationen die Daten für die Validierung von Entgleisungsdetektionssystemen erzeugt werden. Dadurch ist es möglich, die Parameter des Rad-Oberflächen-Kontaktmodells zunächst mittels eines einfachen Simulationsmodells anhand der Messungen zu bestimmen, und Einflüsse ungenau bekannter Parameter beispielsweise des Fahrzeugs auf die Bestimmung der Parameter des Rad-Oberflächen-Kontaktmodells zu vermeiden. Anschließend wird das derart parametrierte Rad-Oberflächen-Kontaktmodell in das komplexe Simulationsmodell integriert, in dem auch andere Teilmodelle enthalten sind, insbesondere ein detaillierteres Modell des Fahrzeugs im Vergleich zum einfach aufgebauten Versuchsträger.

In einer weiteren vorteilhaften Ausgestaltung des Verfahrens ist der Versuchsträger ein System aus einer Masse, einer Feder, einem Dämpfer sowie einem Einzelrad, und die Masse, Federkonstante und die Dämpferkonstante des Versuchsträgers werden so gewählt, dass der Versuchsträger für die durchgeführten Versuche näherungsweise das gleiche Verhalten zeigt wie das Schienenfahrzeug bzw. ein Teilmodell für das Schienenfahrzeug, das im Simulationsmodell enthalten ist, d.h. insbesondere gleiche Massen, gleiche Steifigkeiten und gleiche Kontaktkräfte zwischen Rad und Fahrweg.

Der Versuchsträger enthält somit möglichst wenige und für die Simulation bekannte Elemente, was insbesondere auch den Aufbau und die Parametrierung des weiteren Simulationsmodells, das zur Bestimmung der Parameter des Rad-Oberflächen-Kontaktmodells verwendet wird, erleichtert, während der Versuchsträger für den Einsatzfall der Versuche, d.h. insbesondere das Rollen eines Rades auf einem anderen Fahrweg und hier insbesondere auf dem Beton des Schienenzwischenraums, ein weitgehend gleiches Verhalten wie ein reales Fahrzeug zeigt.

Insbesondere kann dieser einfache Versuchsträger mit geringem Aufwand gebaut und mit ihm die entsprechenden Versuche kostengünstig durchgeführt werden. Damit ist einerseits der Versuchsträger einfach aufzubauen, und insbesondere die Parameter des Mehrkörpersystem-Modells des Versuchsträgers, das im weiteren Simulationsmodell verwendet wird, mittels dessen die Parameter des Rad-Oberflächen-Kontaktmodells angepasst werden, können einfach bestimmt und angepasst werden. Gleichzeitig zeigt der Versuchsträger ein Verhalten, das sehr ähnlich dem Verhalten des Teilmodells für das Schienenfahrzeug ist, das im Simulationsmodell, mit dem die Daten für die Validierung von Entgleisungsdetektionssystemen erzeugt werden, verwendet wird, da dieses weitgehend dem realen Fahrzeug entspricht.

In einer weiteren Ausgestaltung des erfindungsgemäßen Verfahrens wird beim Herstellen des Versuchsträgers die Masse des Versuchsträgers anhand der Masse des Wagenkastens und des Drehgestells des Schienenfahrzeuges, die Federkonstante des Versuchsträgers anhand der Federkonstanten zwischen Wagenkasten und Drehgestell sowie zwischen Drehgestell und Rad, und die Dämpferkonstante des Versuchsträgers anhand der Dämpferkonstanten zwischen Wagenkasten und Drehgestell sowie zwischen Drehgestell und Rad bestimmt. Dämpfer und Feder werden zwischen der Masse und der Masse des Einzelrades angeordnet. Damit ist der Versuchsträger, wie auch sein Teilmodell im weiteren Simulationsmodell zur Parameteranpassung, ein Zwei-Massensystem, bestehend aus einer ersten Masse, die weitgehend der Masse des Wagenkastens, ggf. einschließlich der Masse des Drehgestells entspricht, einer zweiten Masse, die der Masse des Rades entspricht, wobei die beiden Massen durch Feder und Dämpfer, die zwischen der Masse und der Masse des Einzelrades angeordnet werden, verbunden sind. Dadurch, dass als Versuchsträger ein einfaches Zwei-Massensystem mit Feder und Dämpfer verwendet wird, können die Parameter des Versuchsträgers, d.h. Massen, Dämpfungs- und Federkonstante einfach anhand des realen Fahrzeuges bestimmt werden. Das reale Fahrzeug wird damit durch bekannte Verfahren auf ein Zwei-Massensystem reduziert. Dadurch ist eine einfache Parameterermittlung für den Versuchsträger möglich, und gleichzeitig zeigt der Versuchsträger für den Einsatzfall ein weitgehend gleiches Verhalten wie das reale Fahrzeug, d.h. insbesondere weitgehend gleiche Massen, gleiche Steifigkeiten und gleiche Kontaktkräfte.

In einer weiteren vorteilhaften Ausgestaltung des Verfahrens werden die Versuche mit dem Versuchsträger auf einem Fahrweg durchgeführt, der mindestens zwei unterschiedliche Schwellenhöhen aufweist. Eine feste Fahrbahn kann zwischen den Schienen eine weitgehend glatte Beton- oder Asphaltfläche aufweisen, oder auch Schwellen, die in den Beton oder in Asphalt eingegossen sind und aus dem Fahrweg zwischen den Schienen herausragen. Dadurch können während der Fahrt des Versuchsträgers auf den unterschiedlichen Schwellenhöhen unterschiedliche Beschleunigungen gemessen werden, wodurch im Simulationsmodell zur Erzeugung der Daten für die Validierung Rad-Oberflächen-Kontaktmodelle eingesetzt werden können, die den Kontakt zwischen Rad und Oberfläche für verschiedene Schwellenhöhen modellieren, so dass Simulationen für ein Rollen eines entgleisten Rades auf verschiedenen Schwellenhöhen möglich sind, um unter diesen Randbedingungen das Entgleisungsdetektionssystem zu testen.

Je nach Ausgestaltung einer festen Fahrbahn kann diese beispielsweise aus Beton oder aus Asphalt als Grundmaterial bestehen. Die Schienen können direkt beispielsweise mit dem Beton verschraubt sein, oder die feste Fahrbahn kann Schwellen oder Schwellenstümpfe aufweisen, die beispielsweise in den Beton oder den Asphalt eingegossen sein können, und auf denen die Schienen gelagert sind. Die feste Fahrbahn kann auch andere Oberflächengeometrien aufweisen, beispielsweise Rillen im Zwischenraum zwischen den Schienen. Die Versuche, die mit dem Versuchsträger durchgeführt werden, um Daten für die Parametrierung des Rad-Oberflächen-Kontaktmodells zu erhalten, werden für die Arten von Fahrwegen durchgeführt, für die eine Entgleisungserkennung angepasst werden soll. Dabei können die Anregungsmuster, die von der Fahrbahn auf das Rad des Versuchsträgers ausgeübt werden, indem beispielsweise die Schwellenhöhe oder eine Rillentiefe variiert wird oder andere Oberflächengestaltungen herangezogen werden.

In einem Verfahren zum Erkennen einer Entgleisung eines Schienenfahrzeugs auf einem vorbestimmten Fahrweg wird eine Entgleisung anhand von Daten erkannt, die gemäß einem der vorstehend beschriebenen Verfahren validiert worden sind. Dabei können sowohl die Daten als auch der gesamte Algorithmus zur Entgleisungsdetektion anhand der Daten validiert werden. In einer Vorrichtung zum Erkennen einer Entgleisung eines Schienenfahrzeugs auf einem vorbestimmten Fahrweg ist die Vorrichtung dazu konfiguriert, ein Verfahren zum Erkennen einer Entgleisung eines Schienenfahrzeugs auf einem vorbestimmten Fahrweg durchzuführen, das mit einem der vorstehend beschriebenen Verfahren validiert worden ist.

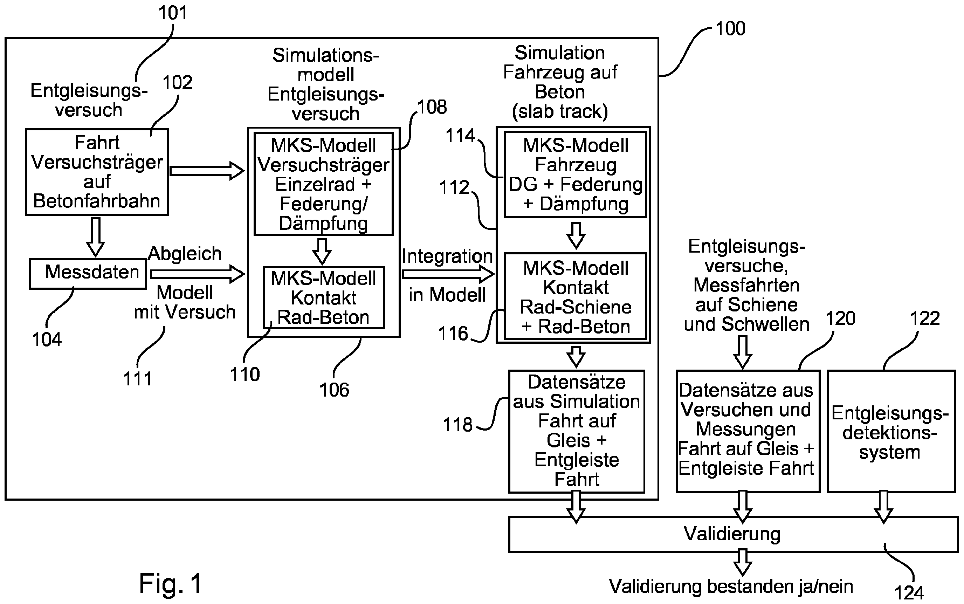

Ein Ausführungsbeispiel des erfindungsgemäßen Verfahrens wird nachfolgend anhand der beigefügten Zeichnung beschrieben. Darin zeigt die einzige Figur 1 eine schematische Darstellung des Verfahrensablaufs eines Verfahrens gemäß einem Ausführungsbeispiel der vorliegenden Erfindung.

In der in der **Fig. 1** dargestellten Ausführung des Verfahrens 100 wird bei einem Entgleisungsversuch 101 eine Fahrt 102 mit dem Versuchsträger auf dem anderen Fahrweg, hier beispielhaft auf einer Betonfahrbahn, durchgeführt. Auf dieser Fahrt 102 werden Messdaten 104 erhoben. Bei der Fahrt 102 des Versuchsträgers auf der Betonfahrbahn wird der Versuchsträger, der hier aus einer Masse, einer Feder, einem Dämpfer und einem Rad besteht, das durch Feder und Dämpfer mit der Masse verbunden ist, über die Versuchsfahrstrecke geschleppt. Die Versuche können jedoch auch auf anderen Fahrbahngestaltungen durchgeführt werden, z.B. auf Asphaltfahrbahnen, auf Fahrbahnen mit unterschiedlicher Schwellenhöhe und Schwellengestaltung etc.

Die Versuchsfahrstrecke besteht beispielhaft aus einer Betonfahrbahn, wie sie bei bestimmten Ausführungen einer festen Fahrbahn vorliegt. Das Rad des Versuchsträgers rollt dabei zwischen den Schienen auf dem Zwischenraum, der bei der hier verwendeten festen Fahrbahn mit Beton ausgefüllt ist. Dabei können bei den Versuchen verschiedene Arten beispielsweise der Betonfahrbahn verwendet werden. Beispielsweise kann eine glatte Betonfahrbahn verwendet werden, und es können Betonfahrbahnen verwendet werden, in denen Schwellen in die Betonfahrbahn einbetoniert sind. Die Schwellen können dabei in unterschiedlicher Höhe aus der Betonfahrbahn herausragen. Selbstverständlich können die Versuche ebenso auch mit anderen Typen fester Fahrbahnen durchgeführt werden.

Das Anregungsmuster durch das Rollen des Rades, hier auf der Betonfahrbahn, wird in Form von Messdaten 104 aufgezeichnet. Dabei werden insbesondere Beschleunigungen aufgezeichnet. Diese Daten können für verschiedene Arten der hier beispielhaft verwendeten Betonfahrbahn, beispielsweise wie vorstehend erläutert für verschiedene Schwellenhöhen, aber auch für verschiedene Geschwindigkeiten der Fahrt aufgezeichnet werden.

Um die Parameter des Rad-Oberflächen-Kontaktmodells 110 für den Kontakt zwischen dem Rad und der hier beispielhaft Betonfahrbahn zu ermitteln, wird ein Simulationsmodell 106 für den Entgleisungsversuch 101, das lediglich zur Parameterermittlung verwendet wird, aufgebaut. Dieses Simulationsmodell 106 besteht aus einem Teilmodell 110 für den Rad-Oberflächen-Kontakt, hier zwischen Rad und Beton der festen Fahrbahn, sowie einem Mehrkörpersystem-Modell 108 des Versuchsträgers. Durch diese beiden Teilmodelle 108, 110 wird der Versuchsaufbau detailgetreu modelliert. Die Parameter des Mehrkörpersystem-Modells 108 für den Versuchsträger können dabei einfach vom Versuchsträger selbst abgeleitet werden. Der Versuchsträger besteht vorliegend lediglich aus einem Einzelrad, einer Masse sowie zwischen Einzelrad und Masse angeordneter Federung und Dämpfung. Dadurch kann das Mehrkörpersystem-Modell 108 des Versuchsträgers einfach parametriert werden und gibt das Verhalten des Versuchsträgers damit im Simulationsmodell 106 sehr genau wieder.

Dadurch ist es möglich, durch den Abgleich zwischen dem Modell 106 des Entgleisungsversuchs 101 und den beim Entgleisungsversuch 101 aufgenommenen Messdaten 104 das Modell mit dem Versuch abzugleichen, d.h. die Parameter des Rad-Beton-Kontaktmodells 110 zu bestimmen. Bei diesem Abgleich 111 werden die Parameter des Kontaktmodells 110 zwischen Rad und Beton so angepasst, dass für die durchgeführten Versuchsfahrten 102 ein mit dem Simulationsmodell 106 des Entgleisungsversuchs 101 simuliertes Verhalten soweit wie möglich mit den beim Entgleisungsversuch aufgenommenen Messdaten 104 übereinstimmt. Dafür können bekannte Verfahren der Parameteranpassung verwendet werden, beispielsweise bekannte Parameteroptimierungsverfahren.

Durch den Abgleich 111 zwischen Modell 106 und Versuch 101 werden somit die Parameter des Rad-Oberflächen-Kontaktmodells 110 für den Kontakt zwischen Rad und Beton ermittelt. Beim Abgleich 111 zwischen Modell 106 und Versuch 101 müssen wie vorstehend ausgeführt nur die Parameter des Rad-Oberflächen-Kontakt-Modells 110 adaptiert werden, da die Parameter des Teilmodells 108 für den Versuchsträger, das ebenfalls Bestandteil des Simulationsmodells 106 für den Entgleisungsversuch 101 ist, bereits bekannt sind.

Im nächsten Schritt wird das Rad-Oberflächen-Kontaktmodell 110 für den Kontakt zwischen Rad und Beton, dessen Parameter aus den Versuchsdaten 104 während des Abgleichs 111 zwischen Modell 106 und Versuch 101 ermittelt wurden, in dem komplexen Simulationsmodell 112 zur Simulation der Fahrt des Schienenfahrzeugs auf den Fahrweg eingesetzt. Dieses Simulationsmodell 112 zur Simulation der Fahrt des Schienenfahrzeugs auf dem Fahrweg ist ein detailliertes Simulationsmodell, das insbesondere ein detailliertes Mehrkörpersystem-Modell 114 des Fahrzeuges sowie ein Mehrkörpersystem-Modell 116 für den Kontakt zwischen Rad und einem Fahrweg aufweist.

Das Modell weist dabei zunächst ein Modell für den Kontakt zwischen Rad und Schiene, hier beispielhaft für einen herkömmlichen Schotteroberbau auf. Da für eine Fahrt eines realen Fahrzeugs auf einer Schiene bei einem Schotteroberbau, d.h. in unentgleistem Zustand problemlos Messungen durchgeführt werden können, kann das Modell anhand dieser Messungen gut an das reale Verhalten angepasst werden, so dass sowohl das im Simulationsmodell 112 verwendete Mehrkörpersystem-Modell 114 des Fahrzeugs als auch das im Simulationsmodell 112 zunächst enthaltene Rad-Schiene-Kontaktmodell eine hohe Simulationsgüte ermöglichen. Selbstverständlich können auch Messungen aus der Fahrt des Fahrzeugs auf der Schiene einer festen Fahrbahn herangezogen werden. Das Mehrkörpersystem-Modell 114 des Fahrzeugs besteht dabei insbesondere aus einer Modellierung der Fahrzeugmassen, beispielsweise des Wagenkastens sowie des Drehgestells und der Radsätze sowie der zwischen diesen Elementen angeordneten Federungen und Dämpfungen. Diese Parameter können durch Versuche, sie können aber auch zumindest teilweise aus den realen Geometrien abgeleitet werden. Dadurch steht ein Simulationsmodell 112 mit Teilmodellen 114 für das Fahrzeug sowie den Rad-Schiene-Kontakt 116 zur Verfügung, mit dem eine hohe Simulationsgüte für eine Fahrt auf der Schiene erzielt werden kann. Von dem Vorhandensein eines derartigen Simulationsmodells wird im vorliegenden Verfahren ausgegangen.

Mit dem Simulationsmodell 112 können, bevor das Kontaktmodell zwischen Rad und Schiene durch das Kontaktmodell zwischen Rad und Beton ausgetauscht wird, zunächst erste Simulationsdaten 118 generiert werden, die für die Validierung 124 der Entgleisungsdetektionssysteme 122 herangezogen werden können, und die zunächst eine normale Fahrt auf einer Schiene unter verschiedenen Randbedingungen, beispielsweise verschiedenen Fahrzeugaufbauten, verschiedenen Geschwindigkeiten und verschiedenen Qualitäten des Fahrwegs, beispielsweise unter Berücksichtigung von Gleislagefehlern, darstellen. Damit erhält man zunächst aus der Simulation Datensätze 118 für eine unentgleiste Fahrt auf dem Gleis.

Anschließend wird im Simulationsmodell 112 das Teilmodell 116 für den Kontakt zwischen Rad und Fahrweg durch das Teilmodell 110 für den Rad-Oberflächen-Kontakt zwischen Rad und Beton ersetzt, dessen Parameter zuvor durch den Abgleich 112 zwischen Modell 106 und Entgleisungsversuch 101 ermittelt wurden. Dadurch erhält man ein Simulationsmodell 112 zur Simulation der Fahrt des Schienenfahrzeugs auf dem Beton bei einer Entgleisung. Mit diesem derart angepassten Simulationsmodell 112 werden dann Simulationen durchgeführt, mit denen die Fahrt des Fahrzeugs nach einer Entgleisung auf dem Beton der Fahrbahn für verschiedene Randbedingungen, beispielsweise verschiedene Geschwindigkeiten, verschiedene Fahrzeugmassen, etc. modelliert wird. Dadurch werden aus der Simulation Datensätze 118 erhalten, die eine entgleiste Fahrt darstellen. Dadurch ist es möglich, simulativ entgleiste Fahrten nachzustellen, deren reale Darstellung an Versuchsträgern durch reale Entgleisungsversuche aufgrund des dafür erforderlichen Aufwandes wirtschaftlich nicht darstellbar wäre.

Diese Simulationsdaten 118 werden anschließend zur Validierung 124 des in dem Entgleisungsdetektionssystem 122 verwendeten Erkennungsalgorithmus verwendet. Zur Validierung 124 können des Weiteren Datensätze 120, die aus Versuchen, bei denen Messungen von normalen Fahrten auf einem Gleis und entgleisten Fahrten durchgeführt werden, ergänzend herangezogen werden.

Insgesamt steht damit ein umfangreicher Datensatz zur Verfügung, mittels dessen ein Entgleisungsdetektionssystem 122 validiert werden kann. Durch das erfindungsgemäße Verfahren 100 ist es dabei insbesondere möglich, für die Validierung 124 Daten 118 bereitzustellen, die Entgleisungssituationen nachbilden, welche durch Versuche nur mit einem erheblichen Aufwand erhalten werden könnten. Dadurch ermöglicht das erfindungsgemäße Verfahren, eine umfassende Validierung 124 von Entgleisungsdetektionssystemen 122 unter verschiedenen Randbedingungen, die durch reale Versuche nicht oder nur mit erheblichem Aufwand berücksichtigt werden könnten, durchzuführen. Das Vorgehen kann für beliebige Fahrwege, d.h. für verschiedene Materialien und Oberflächengestaltungen, angewandt werden.

### BEZUGSZEICHENLISTE

- 100: Verfahren
- 101: Entgleisungsversuch
- 102: Fahrt Versuchsträger auf Betonfahrbahn
- 104: Messdaten
- 106: Simulationsmodell Entgleisungsversuch
- 108: Mehrkörpersystem-Modell des Versuchsträgers
- 110: Kontaktmodell Rad-Beton
- 112: Simulationsmodell
- 114: Mehrkörpersystem-Modell des Fahrzeugs
- 116: Rad-Oberflächenmodell für einen Fahrweg
- 118: Datensatz aus Simulation
- 120: Datensatz aus Versuchen
- 122: Entgleisungsdetektionssystem
- 124: Validierung

## Patentansprüche

1. Verfahren (100) zum Erzeugen von Daten (118) für die Validierung (124) von Entgleisungsdetektionssystemen (122) von Schienenfahrzeugen, **gekennzeichnet durch** die folgenden Schritte:
Auswählen eines anhand von Messungen validierten Simulationsmodells (112) zur Simulation der Fahrt des Schienenfahrzeugs auf einem bestimmten Fahrweg, das ein Teilmodell (116) für den Kontakt zwischen Rad und Fahrweg enthält,
Ersetzen des Teilmodells (116) für den Kontakt zwischen Rad und Fahrweg durch ein Rad-Oberflächen-Kontaktmodell (110) für einen anderen Fahrweg,
Herstellen eines Versuchsträgers, der ein vereinfachtes Modell des Fahrzeugs bildet,
Durchführen von Versuchen (101) mit dem Versuchsträger, bei denen Fahrten (102) auf dem anderen Fahrweg durchgeführt werden,
Anpassen (111) der Parameter des Rad-Oberflächen-Kontaktmodells (110) anhand von bei den Versuchen (101) aufgenommenen Messdaten (104),
Erzeugen von Daten (118) für die Validierung (124) von Entgleisungsdetektionssystemen (122) durch das Durchführen von Simulationen mit dem Simulationsmodell (112).

2. Verfahren (100) nach Anspruch 1,
wobei das Teilmodell (116) für den Kontakt zwischen Rad und Fahrweg des ausgewählten validierten Simulationsmodells (112) durch ein Rad-Oberflächen-Kontaktmodell (110) ersetzt wird, welches verschiedenartige Materialien und Oberflächenstrukturen beschreibt.

3. Verfahren (100) nach Anspruch 1 oder 2,
wobei das Teilmodell (116) für den Kontakt zwischen Rad und Fahrweg des ausgewählten validierten Simulationsmodells (112) einen Rad-Schiene-Kontakt für einen Schotteroberbau oder einen Rad-Schiene-Kontakt für eine feste Fahrbahn modelliert.

4. Verfahren (100) nach einem der vorangehenden Ansprüche,
wobei das Teilmodell (116) für den Kontakt zwischen Rad und Fahrweg durch ein Rad-Beton-Kontaktmodell oder ein Rad-Asphalt-Kontaktmodell ersetzt wird.

5. Verfahren (100) nach einem der vorangehenden Ansprüche,
wobei die Anpassung (111) der Parameter des Rad-Oberflächen-Kontaktmodells (110) anhand der bei den Versuchen (101) aufgenommenen Messdaten (104) mittels eines weiteren Simulationsmodells (106) erfolgt, das aus einem Mehrkörpersystem-Modell (108) des Versuchsträgers sowie dem Rad-Oberflächen-Kontaktmodell (110) für den anderen Fahrweg besteht.

6. Verfahren (100) nach Anspruch 5 ,
wobei das Mehrkörpersystem-Modell (108) des Versuchsträgers aus einer Masse, der Masse eines Einzelrades sowie einer Feder und einem Dämpfer, die zwischen der Masse und der Masse des Einzelrades angeordnet sind, gebildet wird.

7. Verfahren (100) nach Anspruch 6,
wobei im Mehrkörpersystem-Modell (108) des Versuchsträgers die Masse anhand der Masse des Wagenkastens und des Drehgestells des Schienenfahrzeugs, die Federkonstante anhand der Federkonstanten zwischen Wagenkasten und Drehgestell sowie zwischen Drehgestell und Rad und die Dämpferkonstante anhand der Dämpferkonstanten zwischen Wagenkasten und Drehgestell sowie zwischen Drehgestell und Rad bestimmt wird.

8. Verfahren (100) nach einem der Ansprüche 5 bis 7,
wobei das Rad-Oberflächen-Kontaktmodell (110) nach der Anpassung (111) seiner Parameter mittels des weiteren Simulationsmodells (106) und der Messdaten (104) in das Simulationsmodell (112) zur Simulation der Fahrt des Schienenfahrzeugs auf dem Fahrweg integriert wird, um durch das Durchführen von Simulationen mit dem Simulationsmodell (112) die Daten (118) für die Validierung (124) von Entgleisungsdetektionssystemen (122) zu erzeugen.

9. Verfahren (100) nach einem der vorangehenden Ansprüche,
wobei der Versuchsträger ein System aus einer Masse, Feder und Dämpfer sowie einem Einzelrad ist und Masse, Federkonstante und Dämpferkonstante des Versuchsträgers so gewählt werden, dass der Versuchsträger für die durchgeführten Versuche (101) näherungsweise das gleiche Verhalten zeigt wie das Schienenfahrzeug bzw. ein Teilmodell (114) für das Schienenfahrzeug aus dem Simulationsmodell (112).

10. Verfahren (100) nach Anspruch 9,
wobei zum Herstellen des Versuchsträgers die Masse anhand der Masse des Wagenkastens und des Drehgestell des Schienenfahrzeugs, die Federkonstante anhand der Federkonstanten zwischen Wagenkasten und Drehgestell sowie zwischen Drehgestell und Rad und die Dämpferkonstante anhand der Dämpferkonstanten zwischen Wagenkasten und Drehgestell sowie zwischen Drehgestell und Rad bestimmt werden und Feder und Dämpfer zwischen der Masse und der Masse des Einzelrades angeordnet werden.

11. Verfahren (100) nach einem der vorangehenden Ansprüche,
wobei die Versuche (101) auf einem Fahrweg durchgeführt werden, der mindestens zwei unterschiedliche Schwellenhöhen aufweist.

12. Verfahren zum Erkennen einer Entgleisung eines Schienenfahrzeugs auf einem vorbestimmten Fahrweg, **dadurch gekennzeichnet, dass**
eine Entgleisung anhand von Daten erkannt wird, die gemäß einem Verfahren nach einem der Ansprüche 1 bis 11 validiert worden sind.

13. Vorrichtung zum Erkennen einer Entgleisung eines Schienenfahrzeugs auf einem vorbestimmten Fahrweg, **dadurch gekennzeichnet, dass**
die Vorrichtung dazu konfiguriert ist, ein Verfahren nach Anspruch 12 durchzuführen.

## Claims

1. A method (100) for generating data (118) for the validation (124) of derailment detection systems (122) of rail vehicles,
**characterised by** the following steps:
the selection of a measurement-validated simulation model (112) for simulating the journey of the rail vehicle on a specific travelway, this simulation model (112) containing a sub-model (116) for the contact between wheel and travelway,
the replacement of the sub-model (116) for the contact between wheel and travelway by a wheel-surface contact model (110) for another travelway,
the production of a test vehicle providing a simplified model of the vehicle,
the performance of tests (101) using the test vehicle during which journeys (102) are made on the other travelway,
the adaptation (111) of the parameters of the wheel-surface contact model (110) on the basis of measurement data (104) recorded during the tests (101),
the generation of data (118) for the validation (124) of derailment detection systems (122) by carrying out simulations using the simulation model (112).

2. A method (100) according to claim 1,
the sub-model (116) for the contact between wheel and travelway of the selected validated simulation model (112) being replaced by a wheel-surface contact model (110) that describes different types of materials and surface structures.

3. A method (100) according to claim 1 or 2,
the sub-model (116) for the contact between wheel and travelway of the selected validated simulation model (112) modelling a wheel-rail contact for a ballasted track or a wheel-rail contact for a slabbed track.

4. A method (100) according to any one of the preceding claims,
the sub-model (116) for the contact between wheel and travelway being replaced by a wheel-slab contact model or a wheel-asphalt contact model.

5. A method (100) according to any one of the preceding claims,
the adaptation (111) of the parameters of the wheel-surface contact model (110) being carried out on the basis of the measurement data (104) recorded during the tests (101) by means of a further simulation model (106) that consists of a multi-body system (MBS) model (108) of the test vehicle and the wheel-surface contact model (110) for the other travelway.

6. A method (100) according to claim 5,
the multi-body system (MBS) model (108) of the test vehicle comprising a mass, the mass of an individual wheel and a spring and damper that are arranged between the mass and the mass of the individual wheel.

7. A method (100) according to claim 6,
in the multi-body system (MBS) model (108) of the test vehicle the mass being determined on the basis of the mass of the railcar body and the bogie of the rail vehicle, the spring constants being determined on the basis of the spring constants between the railcar body and the bogie and between the bogie and the wheel, and the damper constants being determined on the basis of the damper constants between the railcar body and the bogie and between the bogie and the wheel.

8. A method (100) according to any one of claims 5 to 7,
following the adaptation (111) of the parameters of the wheel-surface contact model (110) by means of the further simulation model (106) and the measurement data (104), the wheel-surface contact model (110) being integrated into the simulation model (112) for simulating the travel of the rail vehicle on the travelway in order to generate the data (118) for the validation (124) of derailment detection systems (122) by carrying out simulations using the simulation model (112).

9. A method (100) according to any one of the preceding claims,
the test vehicle being a system comprising a mass, a spring and damper and an individual wheel, and the mass, the spring constants and the damper constants of the test vehicle being selected such that the test vehicle for the tests (101) carried out exhibits approximately the same behaviour as the rail vehicle or a sub-model (114) for the rail vehicle from the simulation model (112).

10. A method (100) according to claim 9,
in order to produce the test vehicle, the mass being determined on the basis of the mass of the railcar body and the bogie of the rail vehicle, the spring constants being determined on the basis of the spring constants between the railcar body and the bogie and between the bogie and the wheel, and the damper constants being determined on the basis of the damper constants between the railcar body and the bogie and between the bogie and the wheel, and the spring and damper being arranged between the mass and the mass of the individual wheel.

11. A method (100) according to one of the preceding claims,
the tests (101) being carried out on a travelway that has at least two different sleeper heights.

12. A method for detecting a derailment of a rail vehicle on a predetermined travelway, **characterised in that**
a derailment is detected on the basis of data that has been validated according to a method according to any one of claims 1 to 11.

13. A device for detecting a derailment of a rail vehicle on a predetermined travelway, **characterised in that**
the device is configured to carry out a method according to claim 12.

## Revendications

1. Procédé (100) de production de données (118) pour la validation (124) de systèmes (122) de détection du déraillement de véhicules ferroviaires,
**caractérisé par** les stades suivants :
on sélectionne un modèle (112) de simulation validé à l'aide de mesures pour simuler la circulation du véhicule ferroviaire sur une voie de communication déterminée, qui contient un modèle (116) partiel du contact entre roue et voie de communication,
on remplace le modèle (116) partiel du contact entre roue et voie de communication par un modèle (110) de contact roue-surface pour une autre voie de communication,
on produit un support d'essai, qui forme un modèle simplifié du véhicule,
on effectue des essais (101) avec le support d'essai, dans lesquels on effectue des circulations (102) sur l'autre voie de communication,
on adapte (111) les paramètres du modèle (110) de contact roue-surface à l'aide de données (104) de mesure enregistrées dans les essais (101),
on produit des données (118) pour la validation (124) de systèmes (122) de détection du déraillement en effectuant des simulations avec le modèle (112) de simulation.

2. Procédé (100) suivant la revendication 1,
dans lequel on remplace le modèle (116) partiel du contact entre roue et voie de communication du modèle (112) de simulation validé sélectionné par un modèle (110) de contact roue-surface, qui décrit des matériaux et des structures de surface de types différents.

3. Procédé (100) suivant la revendication 1 ou 2,
dans lequel le modèle (116) partiel du contact entre roue et voie de communication du modèle (112) de simulation validé sélectionné modélise un contact roue-rail pour une superstructure de ballast ou un contact roue-rail pour une voie compacte.

4. Procédé (100) suivant l'une des revendications précédentes,
dans lequel on remplace le modèle (116) partiel du contact entre roue et voie de communication par un modèle de contact roue-béton ou par un modèle de contact roue-asphalte.

5. Procédé (100) suivant l'une des revendications précédentes,
dans lequel l'adaptation (111) des paramètres du modèle (110) de contact roue-surface, à l'aide des données (104) de mesure enregistrées dans les essais (101), s'effectue au moyen d'un autre modèle (106) de simulation constitué d'un modèle (108) de système à plusieurs corps du support d'essai, ainsi que du modèle (110) de contact roue-surface pour l'autre voie de communication.

6. Procédé (100) suivant la revendication 5,
dans lequel on forme le modèle (108) de système à plusieurs corps du support d'essai à partir d'une masse, de la masse d'une roue individuelle, ainsi que d'un ressort et d'un amortisseur, qui sont disposés entre la masse et la masse de la roue individuelle.

7. Procédé (100) suivant la revendication 6,
dans lequel, dans le modèle (108) de système à plusieurs corps du support d'essai, on détermine la masse à l'aide de la masse de la caisse et du boggie du véhicule ferroviaire, la constante du ressort à l'aide de la constante de ressort entre la caisse et le boggie, ainsi qu'entre le boggie et la roue, et la constante d'amortisseur à l'aide de la constante d'amortisseur entre la caisse et le boggie, ainsi qu'entre le boggie et la roue.

8. Procédé (100) suivant l'une des revendications 5 à 7,
dans lequel on intègre le modèle (110) de contact roue-surface après l'adaptation (111) de ses paramètres, au moyen de l'autre modèle (106) de simulation et des données (104) de mesure, dans le modèle (112) de simulation pour simuler la circulation du véhicule ferroviaire sur la voie de communication, afin de produire, en effectuant des simulations avec le modèle (112) de simulation, des données (118) pour la validation (124) de systèmes (122) de détection du déraillement.

9. Procédé (100) suivant l'une des revendications précédentes,
dans lequel le support d'essai est un système composé d'une masse, d'un ressort et d'un amortisseur, ainsi que d'une roue individuelle, et on sélectionne la masse, la constante de ressort et la constante d'amortisseur du support d'essai, de manière à ce que le support d'essai ait, pour les essais (101) effectués, à peu près le même comportement que le véhicule ferroviaire ou un modèle (114) partiel du véhicule ferroviaire dans le modèle (112) de simulation.

10. Procédé (100) suivant la revendication 9,
dans lequel, pour produire le support d'essai, on détermine la masse à l'aide de la masse de la caisse et du boggie du véhicule ferroviaire, la constante de ressort à l'aide de la constante de ressort entre la caisse et le boggie, ainsi qu'entre le boggie et la roue, et la constante d'amortisseur à l'aide de la constante d'amortisseur entre la caisse et le boggie, ainsi qu'entre le boggie et la roue, et on dispose le ressort et l'amortisseur entre la masse et la masse de la roue individuelle.

11. Procédé (100) suivant l'une des revendications précédentes,
dans lequel on effectue les essais (101) sur une voie de communication, qui a au moins deux hauteurs de traverse différentes.

12. Procédé de détection d'un déraillement d'un véhicule ferroviaire sur une voie de communication déterminée à l'avance,
**caractérisé en ce que**
on détecte un déraillement à l'aide de données, qui ont été validées suivant un procédé selon l'une des revendications 1 à 11.

13. Installation de détection d'un déraillement d'un véhicule ferroviaire sur une voie de communication déterminée à l'avance,
**caractérisée en ce que**
l'installation est configurée pour effectuer un procédé suivant la revendication 12.
